# EUROPEAN PATENT APPLICATION

(11) **EP 3 181 917 A1**
(43) Date of publication of application: **21.06.2017**
(21) Application number: 16202233.9
(22) Date of filing: 05.12.2016
(51) Int. Cl.: F16B 31/06, F16B 33/02

(54) **THREAD FOR IMPROVED FASTENER RELIABILITY**

(30) Priority: 18.12.2015 US 201514974029
(71) Applicant: General Electric Company, Schenectady, NY 12345 (US)
(72) Inventor: FRUTSCHY, Kristopher John, Schenectady, NY 12345 (US); FORTE, Guido F., Schenectady, NY 12345 (US)
(74) Representative: Foster, Christopher Michael

(57) **Abstract**

A fastener arrangement for securing at least two components together may include a male fastener (300) with a first screw thread (302) and a female fastener (301) with a second screw thread (303), wherein one of the first screw thread and the second screw thread is a straight screw thread and the other of the first screw thread and the second screw thread is a hybrid screw thread that includes a tapered screw thread portion and a straight screw thread portion.

## Description

### BACKGROUND OF THE TECHNOLOGY

The present technology relates to a thread for a fastener arrangement that may include a nut and a bolt or a stud.

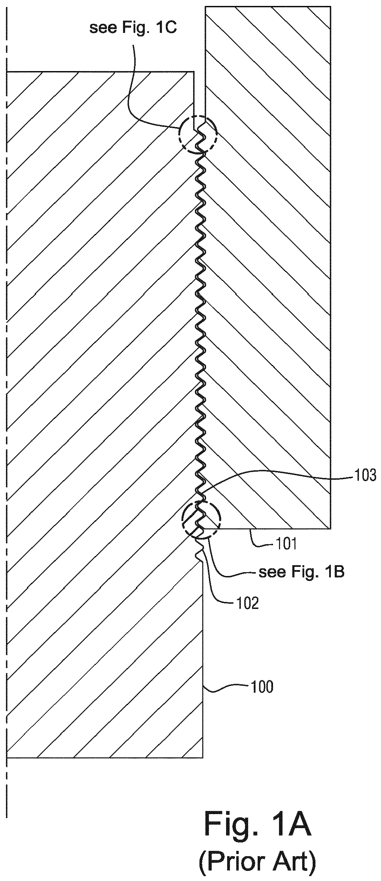

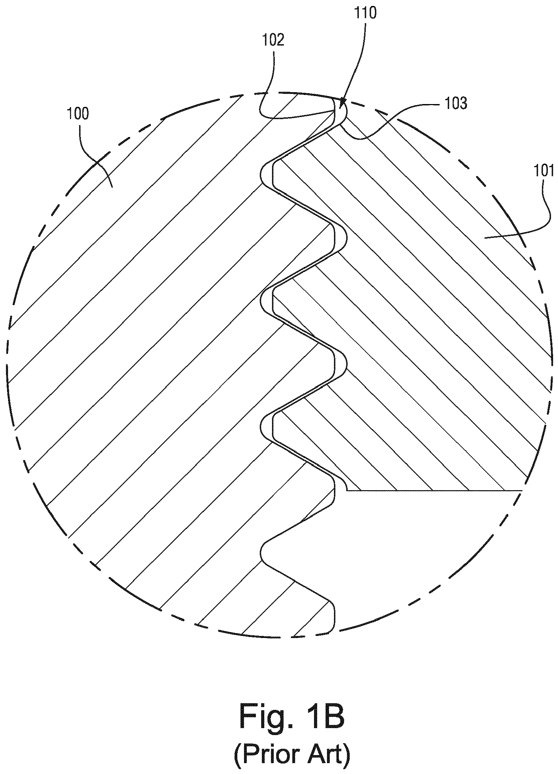

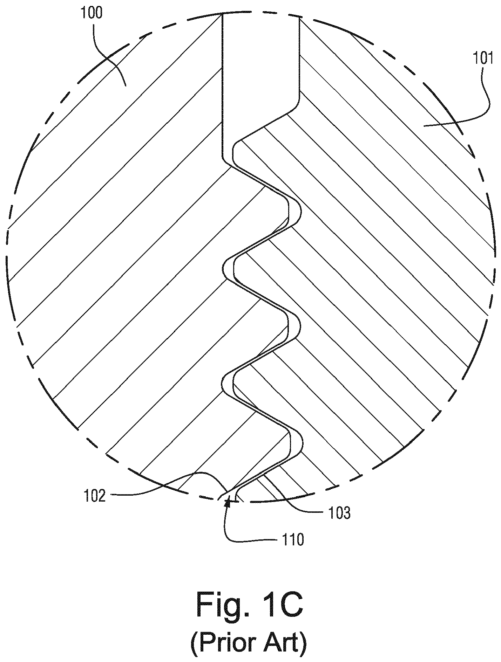

Threaded fastener technology has conventionally employed one of two types of screw threads to secure threaded fasteners together. One type of screw thread is the straight screw thread, which is depicted in the partial cross-sectional views of FIGS. 1A-1C. This arrangement shows the engagement of a male fastener 100, *e.g*., a stud or a bolt, and a female fastener 101, *e.g.,* a nut. The male fastener 100 has a first screw thread 102 of straight screw threads and the female fastener 101 has a second screw thread 103 of straight screw threads. There is also a small gap 110 between the screw threads 102, 103 of the male fastener 100 and the female fastener 101. The gap 110 is constant along the entire thread engagement length and is the same in FIGS. 1B and 1C, because both fasteners have straight screw threads. Also, while this gap 110 is shown in the drawings for emphasis, one of ordinary skill in the art would understand that the gap 110 may not actually be visible to the naked eye if the fasteners are sufficiently small. The pitch diameter, the major diameter, and the minor diameter of the thread in straight screw threads do not change along the length of the fastener. The bottom thread of a fastener with straight screw threads is typically the highest loaded thread. This load distribution may be disadvantageous, because if the bottom thread fails, then the entire fastener connection may fail, because applied stress on the cross-section of the male fastener increases as the crack propagates. The minor diameters and major diameters of the thread forms are sized so that there is clearance (and thus no interference) at these positions during thread engagement. Contact and subsequent force transmission between the male fastener threads and the female fastener threads occurs at the pitch diameter. The female fastener thread has a pitch diameter, which is slightly larger than the male thread pitch diameter to allow assembly. The difference between the pitch diameters is known as the pitch clearance.

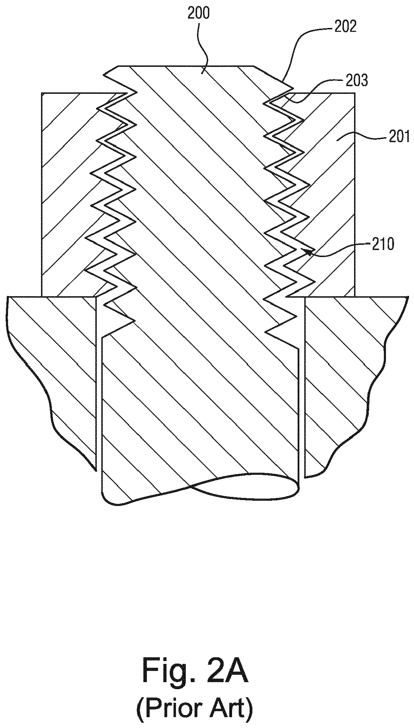

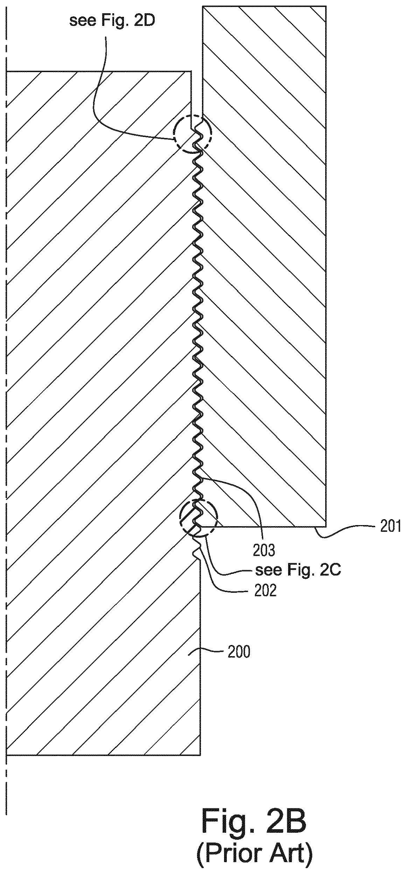

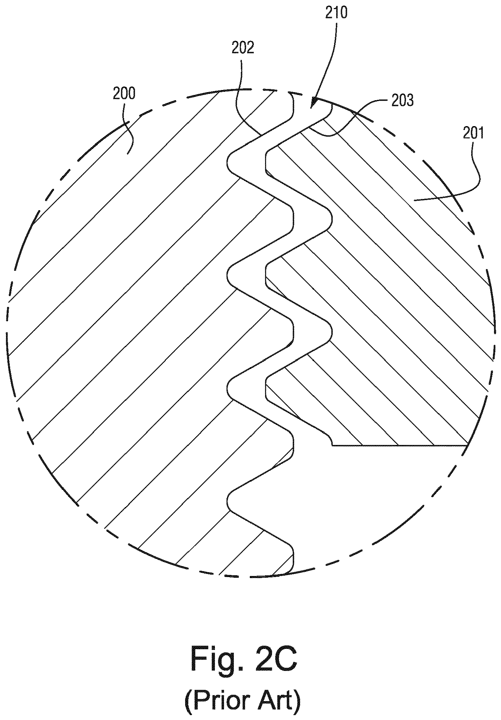

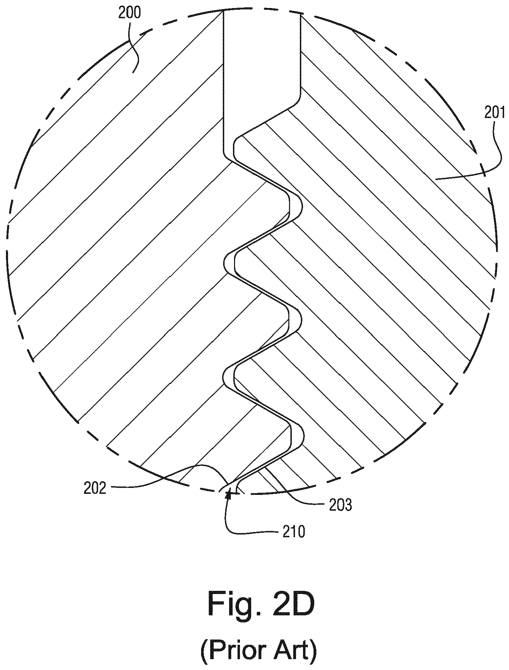

Another type of screw thread configuration is the tapered screw thread, which is depicted in the partial cross-sectional views of FIGS. 2A-2D. This arrangement shows the engagement of a male fastener 200, *e.g.,* a stud or a bolt, and a female fastener 201, *e.g.,* a nut. The male fastener 200 has a first screw thread 202 of straight screw threads and the female fastener 201 has a second screw thread 203 of tapered screw threads. Although not depicted in the drawings, the inverse is also known in the art where the first screw thread 202 of the male fastener 200 has tapered screw threads and the second screw thread 203 of the female fastener 201 has straight screw threads. There is also a small gap 210 between the screw threads 202, 203 of the male fastener 200 and the female fastener 201. The gap 210 is larger in FIG. 2C than in FIG. 2D, because of the changing pitch diameter of the tapered screw threads 203 of the female fastener 201. Also, while this gap 210 is shown in the drawings for emphasis, one of ordinary skill in the art would understand that the gap 210 may not actually be visible to the naked eye if the fasteners are sufficiently small. A tapered thread profile is slightly conical in shape along the fastener length, *i.e.,* the pitch diameter, the major diameter, and the minor diameter of the thread change linearly in proportion to the length of the fastener and at the same rate. The screw thread at the top of the nut in FIG. 2B is typically the highest loaded screw thread and the screw thread at the bottom of the nut is subjected to lesser load. The bottom thread is also typically not subjected to much, if any, increased stress from stud bending. The main advantage of the tapered thread configuration is the highest load thread is at the top position, which allows load redistribution and sharing with the remaining (lower) intact threads in the case of top thread failure. A disadvantage of tapered screw threads is the susceptibility to galling during assembly, which may result in the fasteners being difficult to separate, because they are effectively cold-welded together.

The bottom thread may be understood to refer to the thread interface that is first engaged, when the separate male and female fasteners are threaded together during assembly - the bottom thread may be closest to the male fastener centroid. The top thread may be understood to refer to the thread interface that is last engaged, when separate the male and female fasteners are threaded together during assembly - the top thread may be farthest from the male fastener centroid. Thread interface may be understood to refer to the contact surface formed by the male fastener thread and the female fastener thread at that local position in the mated assembly.

The most common thread configuration is unified (standard, UN or American National), which is characterized by 60 degree triangular profile with rounded peaks and valleys. The unified (standard) thread configuration may be applied to the prior art technologies described above or the screw thread configuration of the present technology described below. Other thread configurations include: unified (coarse), unified (sharp V), metric, Whitworth (i.e., British standard), ACME (i.e., power screw), buttress, knuckle, square, and modified square.

### BRIEF DESCRIPTION OF THE TECHNOLOGY

An aspect of the present technology is directed to improvements in fastener threads to overcome the deficiencies of the known screw threads described above.

An aspect of the present technology is directed to a fastener arrangement for securing at least two components together. The fastener arrangement may comprise: a male fastener with a first screw thread; and a female fastener with a second screw thread, wherein one of the first screw thread and the second screw thread is a straight screw thread and the other of the first screw thread and the second screw thread is a hybrid screw thread that includes a tapered screw thread portion and a straight screw thread portion.

In examples, (a) each start of the hybrid screw thread may be continuous from the tapered screw thread portion to the straight screw thread portion, (b) the straight screw thread of one of the male fastener and the female fastener may be structured to engage the tapered screw thread portion of the hybrid screw thread before the straight screw thread portion when the male fastener and the female fastener are engaged, (c) 50% of the thread length of the hybrid screw thread may be the tapered screw thread portion and 50% of the thread length of the hybrid screw thread may be the straight screw thread portion, (d) 75% of the thread length of the hybrid screw thread may be the tapered screw thread portion and 25% of the thread length of the hybrid screw thread may be the straight screw thread portion, (e) the tapered screw thread portion may be more than 50% of the thread length of the hybrid screw thread or the straight screw thread portion may be more than 50% of the thread length of the hybrid thread, (f) the tapered screw thread portion may be less than 50% of the thread length of the hybrid screw thread or the straight screw thread portion may be less than 50% of the thread length of the hybrid thread, (g) the straight screw thread of one of the first screw thread and the second screw thread may engage with the tapered screw thread portion and the straight screw thread portion of the hybrid screw thread when the male fastener and the female fastener are fully engaged, (h) the tapered screw thread portion and the straight screw thread portion of the hybrid screw thread may have a thread configuration that comprises one of: unified (standard), unified (coarse), unified (sharp V), metric, British Standard Whitworth, Acme, buttress, knuckle, square, and modified square, and/or (i) the male fastener is a stud or a bolt and the female fastener is a nut.

An aspect of the present technology is directed to a male fastener. The male fastener may comprise a hybrid screw thread that includes a tapered screw thread portion and a straight screw thread portion.

In examples, (a) each start of the hybrid screw thread may be continuous from the tapered screw thread portion to the straight screw thread portion, (b) 50% of the thread length of the hybrid screw thread may be the tapered screw thread portion and 50% of the thread length of the hybrid screw thread may be the straight screw thread portion, (c) 75% of the thread length of the hybrid screw thread may be the tapered screw thread portion and 25% of the thread length of the hybrid screw thread may be the straight screw thread portion, (d) the tapered screw thread portion may be more than 50% of the thread length of the hybrid screw thread or the straight screw thread portion may be more than 50% of the thread length of the hybrid thread, (e) the tapered screw thread portion may be less than 50% of the thread length of the hybrid screw thread or the straight screw thread portion may be less than 50% of the thread length of the hybrid thread, (f) the tapered screw thread portion and the straight screw thread portion of the hybrid screw thread may have a thread configuration that comprises one of: unified (standard), unified (coarse), unified (sharp V), metric, British Standard Whitworth, Acme, buttress, knuckle, square, and modified square, and/or (g) the male fastener may be a stud or a bolt.

An aspect of the present technology is directed to a female fastener. The female fastener may comprise a hybrid screw thread that includes a tapered screw thread portion and a straight screw thread portion.

In examples, (a) each start of the hybrid screw thread may be continuous from the tapered screw thread portion to the straight screw thread portion, (b) 50% of the thread length of the hybrid screw thread may be the tapered screw thread portion and 50% of the thread length of the hybrid screw thread may be the straight screw thread portion, (c) 75% of the thread length of the hybrid screw thread may be the tapered screw thread portion and 25% of the thread length of the hybrid screw thread may be the straight screw thread portion, (d) the tapered screw thread portion may be more than 50% of the thread length of the hybrid screw thread or the straight screw thread portion may be more than 50% of the thread length of the hybrid thread, (e) the tapered screw thread portion may be less than 50% of the thread length of the hybrid screw thread or the straight screw thread portion may be less than 50% of the thread length of the hybrid thread, (f) the tapered screw thread portion and the straight screw thread portion of the hybrid screw thread may have a thread configuration that comprises one of: unified (standard), unified (coarse), unified (sharp V), metric, British Standard Whitworth, Acme, buttress, knuckle, square, and modified square, and/or (g) the female fastener is a nut.

### BRIEF DESCRIPTION OF THE DRAWINGS

FIG. 1A is a partial cross-sectional view of a fastener arrangement where the female fastener has straight screw threads.
FIG. 1B is a detailed cross-sectional view of a lower portion of a fastener arrangement where the female fastener has straight screw threads.
FIG. 1C is a detailed cross-sectional view of an upper portion of a fastener arrangement where the female fastener has straight screw threads.
FIG. 2A is a cross-sectional view of a fastener arrangement where the female fastener has tapered screw threads.
FIG. 2B is a partial cross-sectional view of a fastener arrangement where the female fastener has tapered screw threads.
FIG. 2C is a detailed cross-sectional view of a lower portion of a fastener arrangement where the female fastener has tapered screw threads.
FIG. 2D is a detailed cross-sectional view of an upper portion of a fastener arrangement where the female fastener has tapered screw threads.
FIG. 3 is a partial cross-sectional view of a fastener arrangement according to an example of the present technology where the female fastener has a hybrid screw thread of tapered and straight screw threads.
FIG. 4A is another partial cross-sectional view of a fastener arrangement according to an example of the present technology where the female fastener has a hybrid screw thread of tapered screw threads and straight screw threads.
FIG. 4B is a detailed cross-sectional view of a lower portion of a fastener arrangement according to an example of the present technology where the female fastener has a hybrid screw thread of tapered screw threads and straight screw threads.
FIG. 4C is a detailed cross-sectional view of an upper portion of a fastener arrangement according to an example of the present technology where the female fastener has a hybrid screw thread of tapered screw threads and straight screw threads.
FIG. 4D is a detailed cross-sectional view of a portion of a fastener arrangement where the female fastener has a hybrid screw thread of tapered screw threads and straight screw threads and depicts the transition between the tapered screw threads and straight screw threads according to an example of the present technology.
FIG. 5A is a partial cross-sectional view of a fastener arrangement where the female fastener has straight screw threads showing the shear stresses of the fastener arrangement when the male fastener is subjected to a tensile load.
FIG. 5B is a partial cross-sectional view of a fastener arrangement where the female fastener has tapered screw threads showing the shear stresses of the fastener arrangement when the male fastener is subjected to a tensile load.
FIG. 5C is a partial cross-sectional view of a fastener arrangement where the female fastener has a hybrid screw thread of tapered screw threads and straight screw threads according to an example of the present technology showing the shear stresses of the fastener arrangement when the male fastener is subjected to a tensile load.
FIG. 6A is a top view of a female fastener of a fastener arrangement.
FIG. 6B is a cross-sectional view of a female fastener of a fastener arrangement with straight screw threads.
FIG. 6C is a cross-sectional view of a female fastener of a fastener arrangement with tapered screw threads.
FIG. 6D is a cross-sectional view of a female fastener of a fastener arrangement with a hybrid screw thread of tapered screw threads and straight screw threads according to an example of the present technology where 75% of the thread length is tapered screw threads 50% of the thread length is straight screw threads.
FIG. 6E is a cross-sectional view of a female fastener of a fastener arrangement with a hybrid screw thread of tapered screw threads and straight screw threads according to an example of the present technology where 50% of the thread length is tapered screw threads 50% of the thread length is straight screw threads.
FIG. 7A is a side view of a male fastener of a fastener arrangement with straight screw threads.
FIG. 7B is a side view of a male fastener of a fastener arrangement with tapered screw threads.
FIG. 7C is a side view of a male fastener of a fastener arrangement with a hybrid screw thread of tapered screw threads and straight screw threads according to an example of the present technology where 50% of the thread length is tapered screw threads 50% of the thread length is straight screw threads.
FIG. 7D is a side view of a male fastener of a fastener arrangement with a hybrid screw thread of tapered screw threads and straight screw threads according to an example of the present technology where 75% of the thread length is tapered screw threads 50% of the thread length is straight screw threads.

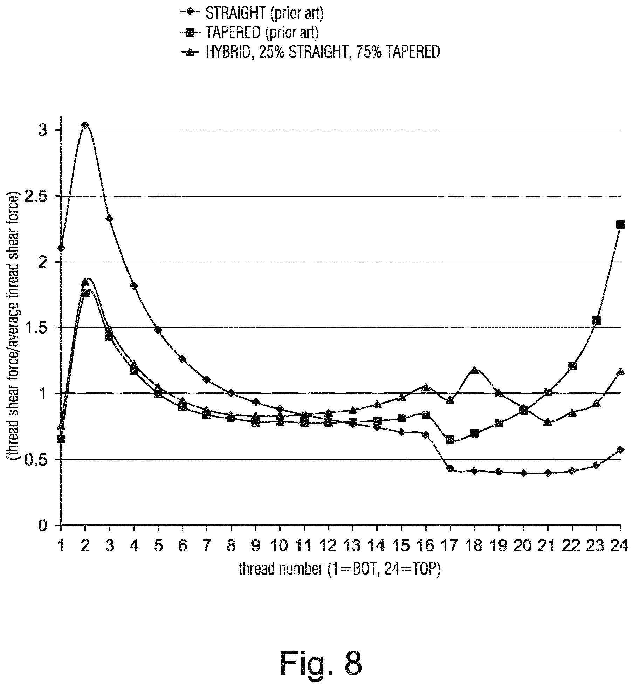

FIG. 8 shows a graph of a finite element analysis comparing the shear force applied to individual screw threads divided by the average shear force of all the engaged threads of a female fastener of a fastener arrangement having tapered screw threads, straight screw threads, and a hybrid screw thread of tapered screw threads and straight screw threads where the bottom 75% of the screw threads *(i.e.,* threads 1-18) are tapered and the top 25% of the screw threads *(i.e.,* threads 19-24) are straight according to an example of the present technology when a tensile load is applied to a male fastener of the fastener arrangement.
FIG. 9 shows a graph of a finite element analysis comparing the shear force applied to individual screw threads divided by the average shear force of all the engaged threads to show the isochronous creep material response of individual screw threads of a female fastener of a fastener arrangement having tapered screw threads, straight screw threads, and a hybrid screw thread of tapered screw threads and straight screw threads according to an example of the present technology when a tensile load is applied to a male fastener of the fastener arrangement.
FIG. 10 shows a graph of a finite element analysis of the shear stress applied to individual screw threads of a female fastener of a fastener arrangement having tapered screw threads when different tensile loads are applied to a male fastener of the fastener arrangement.
FIG. 11 shows a graph of a finite element analysis of the shear stress applied to individual threads of a female fastener of a fastener arrangement having a hybrid screw thread of tapered screw threads and straight screw threads according to an example of the present technology when different tensile loads are applied to a male fastener of the fastener arrangement.

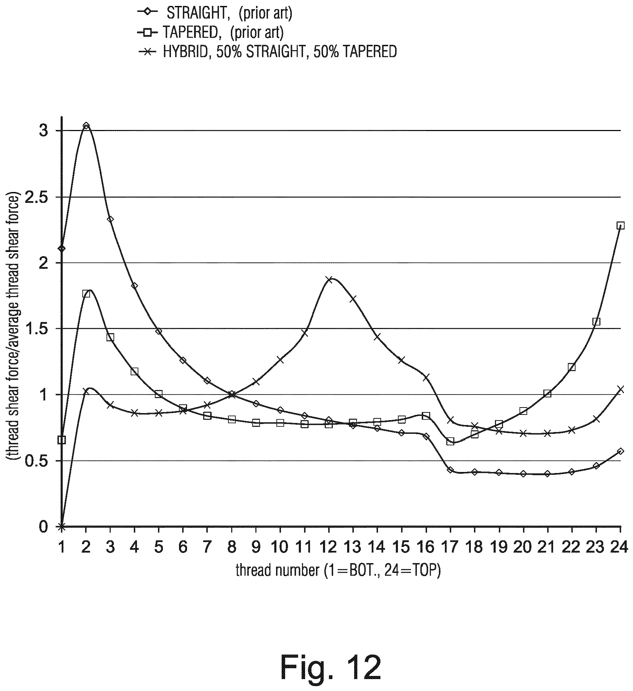

FIG. 12 shows a graph of a finite element analysis comparing the shear force applied to individual screw threads divided by the average shear force of all the engaged threads of a female fastener of a fastener arrangement having tapered screw threads, straight screw threads, and a hybrid screw thread of tapered screw threads and straight screw threads where the bottom 50% of the screw threads *(i.e.,* threads 1-12) are tapered and the top 50% of the screw threads *(i.e.,* threads 13-24) are straight according to an example of the present technology when a tensile load is applied to a male fastener of the fastener arrangement.

### DETAILED DESCRIPTION OF THE TECHNOLOGY

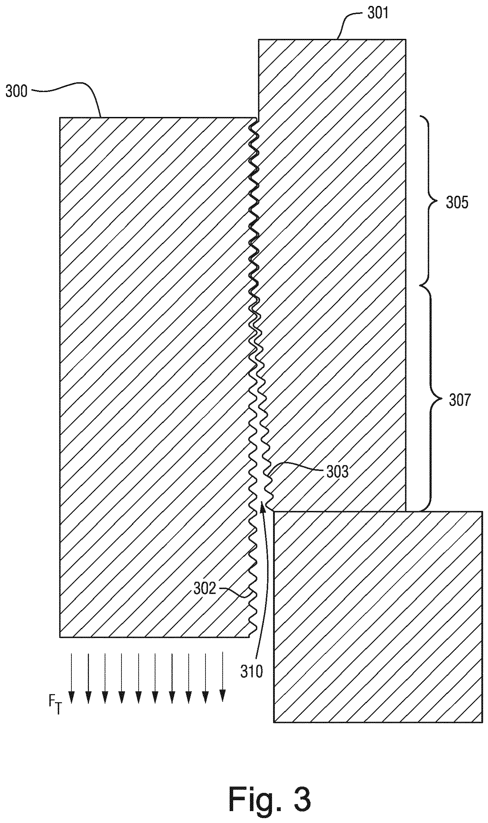

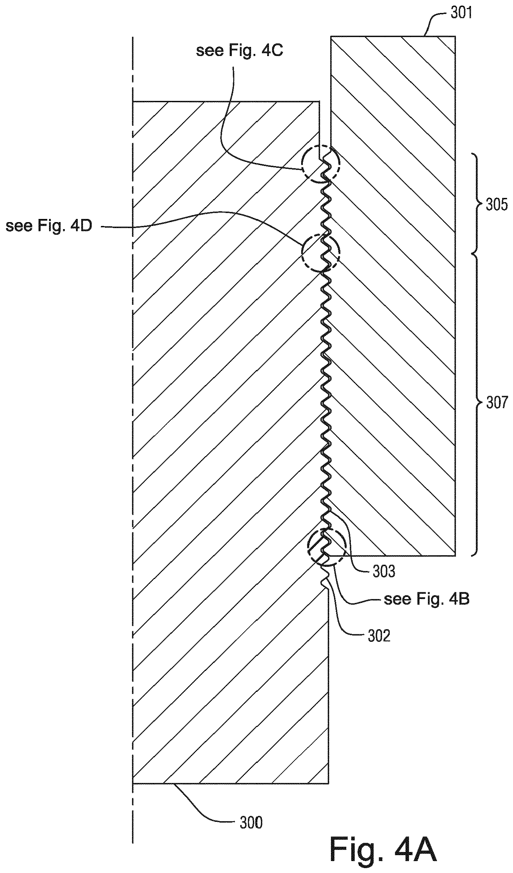

As described above, the known screw thread arrangements (straight and tapered) for fasteners are each subject to certain drawbacks. Examples of the present technology, which seeks to overcome these drawbacks, are depicted in Figs. 3 and 4A-4D. This arrangement shows the engagement of a male fastener 300, *e.g*., a stud or a bolt, and a female fastener 301, *e.g.,* a nut. The male fastener 300 has a first screw thread 302 of straight screw threads and the female fastener 301 has a second screw thread 303 of that is a hybrid screw thread having a straight screw thread portion 305 and a tapered screw thread portion 307.

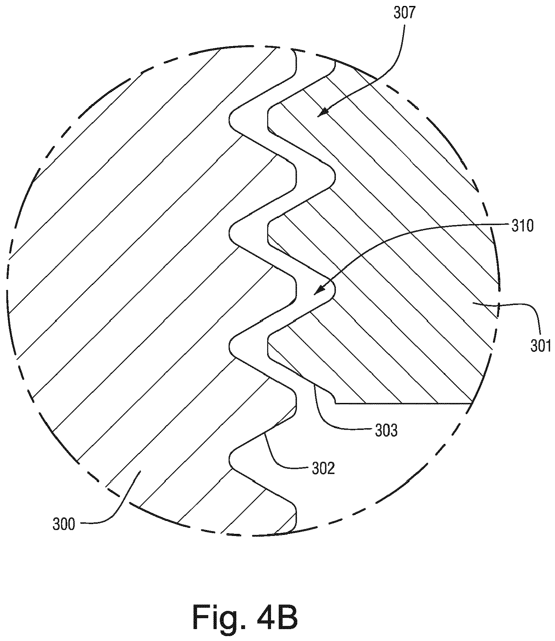

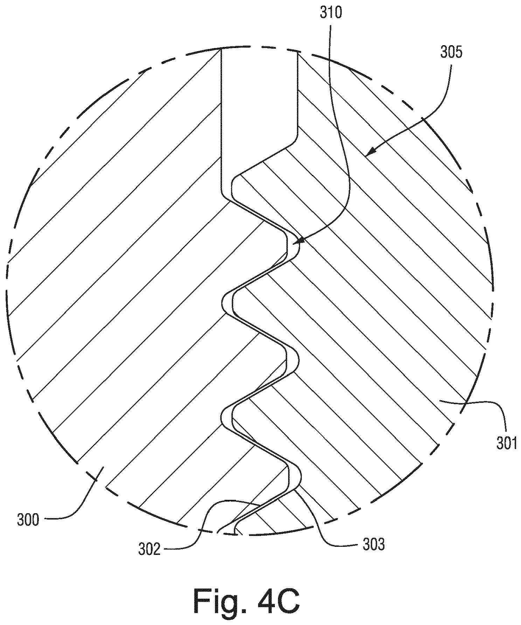

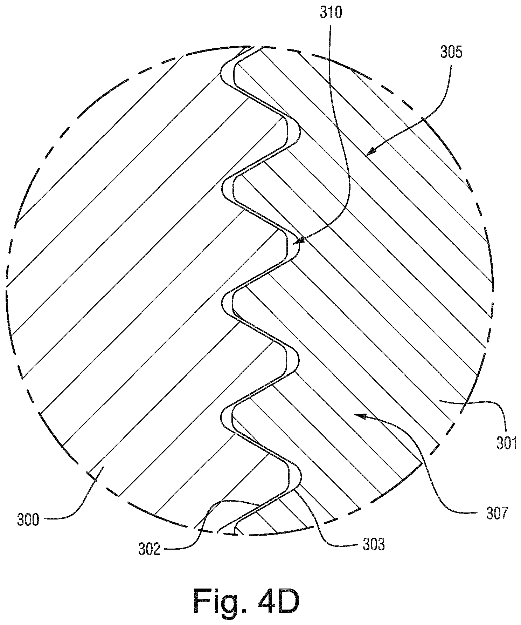

There is also a small gap 310 between the threads 302, 303 of the male fastener 300 and the female fastener 301. In Fig. 3, the gap 310 is emphasized by a high degree of taper at the tapered screw thread portion 307 to emphasize in the drawing that this screw thread portion 307 is tapered and the screw threads 303 at the tapered screw thread portion 307 are shown spaced away from and not engaged with the screw threads of 302 of the male fastener 300. However, it should be understood that in practice that the taper of the screw threads 303 at the tapered screw thread portion 307 would not be so large and there would be at least some degree of engagement between the screw threads 302 of the male fastener and the screw threads 303 of the female fastener 301 at both the tapered screw thread portion 307 and the straight screw thread portion 305 when the fasteners are engaged, as is shown in FIG. 4A. The gap 310 is larger in FIG. 4B than in FIG. 4C, because of the tapered screw threads 303 at the tapered screw thread portion 307 of the female fastener 301. The transition between the tapered screw thread portion 307 and the straight screw thread portion 305 is shown in Fig. 4D. In Fig. 4D the screw threads 303 may visibly appear to be effectively straight throughout the transition are because the detailed view at this location shows that the tapered screw thread portion 307 has major, minor, and pitch diameters that approach the major, minor, and pitch diameters of the straight screw thread portion 305 at the transition area. Also, while this gap 310 is shown in the drawings for emphasis, one of ordinary skill in the art would understand that the gap 310 may not actually be visible to the naked eye if the fasteners are sufficiently small. Fig. 3 also shows a tensile load applied F_{T} to the male fastener 300. Also, it should be understood that each start of the screw threads 303 will be continuous from the tapered screw thread portion 307 to the straight screw thread portion 305.

While the examples in Figs. 3 and 4A-4D show that the female fastener 301 is provided with the hybrid screw thread having a tapered screw thread portion 307 and a straight screw thread portion 305, it should be understood that in another example the male fastener 300 may have the hybrid screw threads and the female fastener 301 would have straight screw threads. Of course, in this alternative example the taper of the tapered screw thread portion 307 on the male fastener would widen towards the straight screw thread portion 305, as opposed to the examples of Figs. 3 and 4A-4D where the female screw threads 303 at the tapered screw thread portion 307 narrow towards the straight screw thread portion 305. It should also be understood that in either example the screw threads at the tapered screw thread portion 307 engage with the straight screw threads of the other fastener before the screw threads at the straight screw thread portion 305. Also, once fully engaged, the straight screw threads will be engaged with the screw threads of both the tapered screw thread portion 307 and the straight screw thread portion 305.

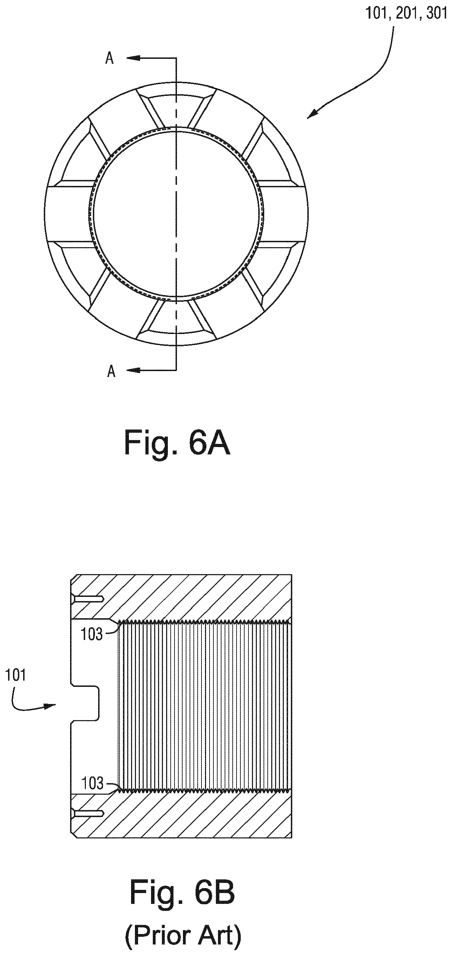

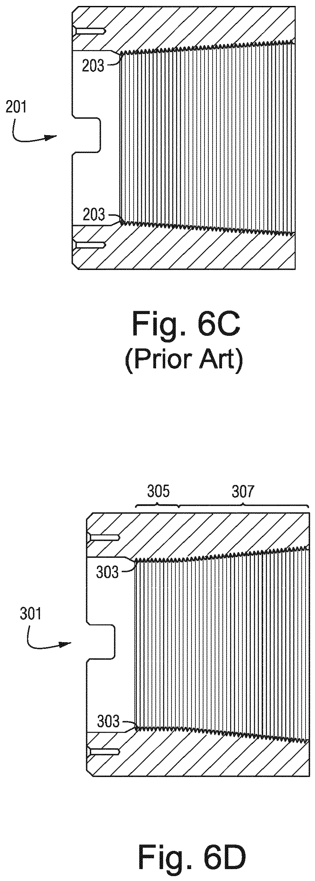

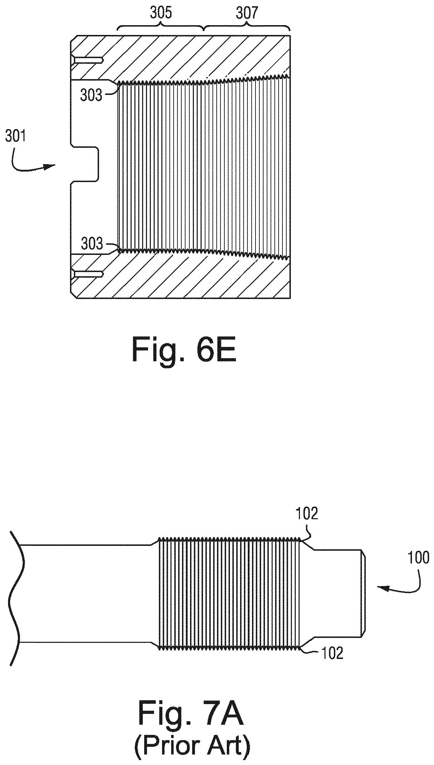

Fig. 6A depicts a top view of a female fastener 101, 201, 301 that may have straight screw threads 103, as shown in Fig. 6B, tapered screw threads 203, as shown in Fig. 6C, or the hybrid screw threads 303 that are shown in Figs. 6D and 6E. Fig. 6B is a cross-sectional view of the female fastener 101 of Fig. 6A and has straight screw threads 103 along its length. Fig. 6C is a cross-sectional view of the female fastener 201 of Fig. 6A and has tapered screw threads 203 along its length. Figs. 6D and 6E depict similar cross-sectional views, however, the screw threads 303 in each of these examples is a hybrid screw thread that includes a tapered screw thread portion 307 and a straight screw thread portion 305 according to the present technology. In Fig. 6D, the tapered screw thread portion 307 accounts for 75% of the thread length of the screw threads 303 and the straight screw thread portion 305 accounts for the other 25%. In Fig. 6E, the tapered screw thread portion 307 accounts for 50% of the thread length of the screw threads 303 and the straight screw thread portion 305 accounts for the other 50%. In still further examples, the tapered screw thread portion 307 may account for more or less than 50% of the thread length of the hybrid screw threads 303 or the straight screw thread portion 305 may account for more or less than 50% of the thread length of the hybrid screw threads 303. It should be understood that the tapered screw threads depicted in Figs. 6C-6E are exaggerated to depict the taper such that it is recognizable by the naked eye. However, it should also be understood that in practice that the female fastener 201, 301 may be so small and/or the rate of taper may be so small that it is not actually visible to the naked eye.

It should also be understood that the hybrid screw threads of the present technology need not be applied to a female fastener such as a nut. Rather, in still further examples a male fastener may be directly attached to a component that is threaded with the hybrid screw threads, such as a beam, a post, a plate, etc. This would allow the male fastener to be secured directly to the component threaded with the hybrid screw threads.

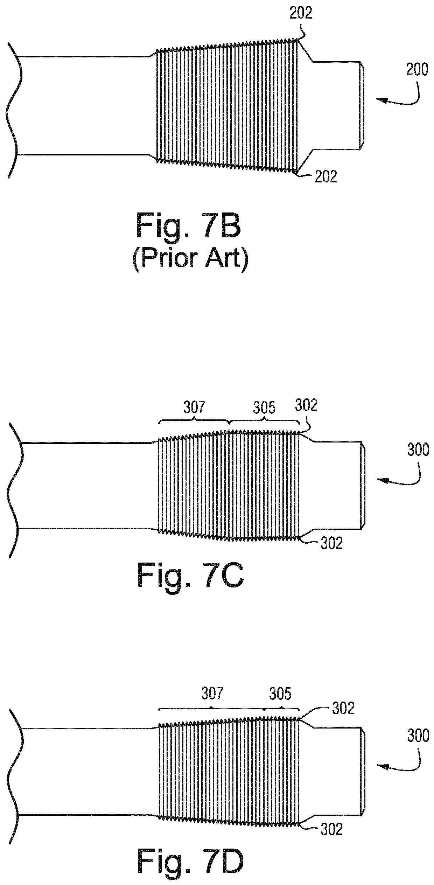

Figs. 7A depicts another prior art example where the male fastener 100 is provided with straight screw threads 102. Figs. 7B depicts another prior art example where the male fastener 200 is provided with tapered screw threads 202. Fig. 7C shows a male fastener 300 with the hybrid screw threads 302 according to an example of the present technology. The male fastener's 300 hybrid screw threads 302 include a tapered screw thread portion 307 and a straight screw thread portion 305. It should be understood that a female fastener 301 that would be connected to the male fastener 300 in this example would have straight screw threads 303, because in this example the male fastener 300 has the hybrid screw threads 302. Also, in the example of Fig. 7C the tapered screw thread portion 307 and the straight screw thread portion 305 each account for 50% of the thread length of the screw threads 302. Fig. 7D depicts an exemplary variation of the male fastener 300 of Fig. 7C where the tapered screw thread portion 307 accounts for 75% of the thread length of the screw threads 302 and the straight screw thread portion 305 accounts for 25% of the thread length of the screw threads 302. In still further examples, the tapered screw thread portion 307 may account for more or less than 50% of the thread length of the hybrid screw threads 303 or the straight screw thread portion 305 may account for more or less than 50% of the thread length of the hybrid screw threads 303. It should be understood that the tapered screw threads depicted in Figs. 7B-7D are exaggerated to depict the taper such that it is recognizable by the naked eye. However, it should also be understood that in practice that the male fastener 200, 300 may be so small and/or the rate of taper may be so small that it is not actually visible to the naked eye.

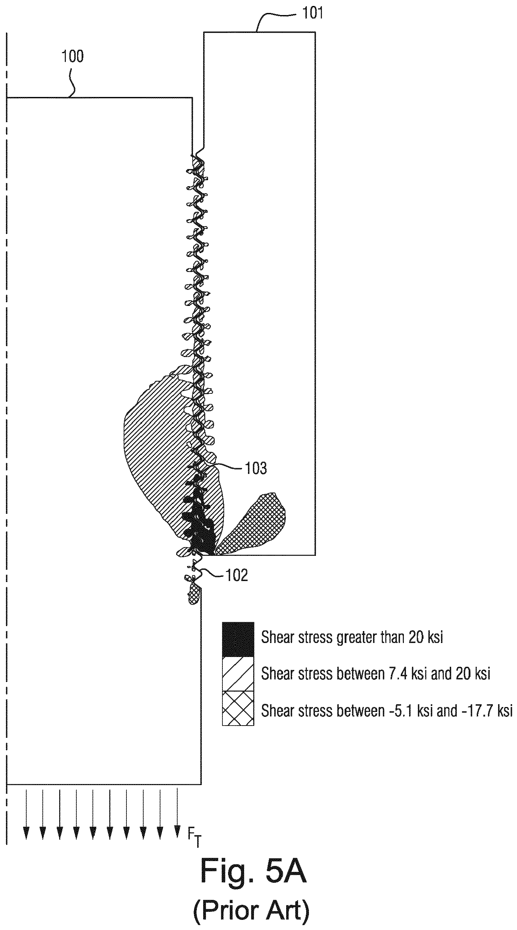

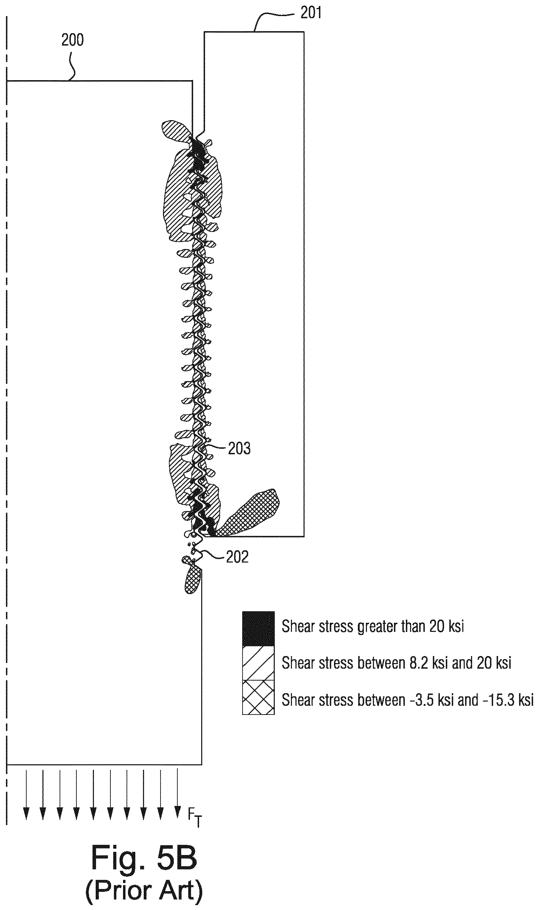

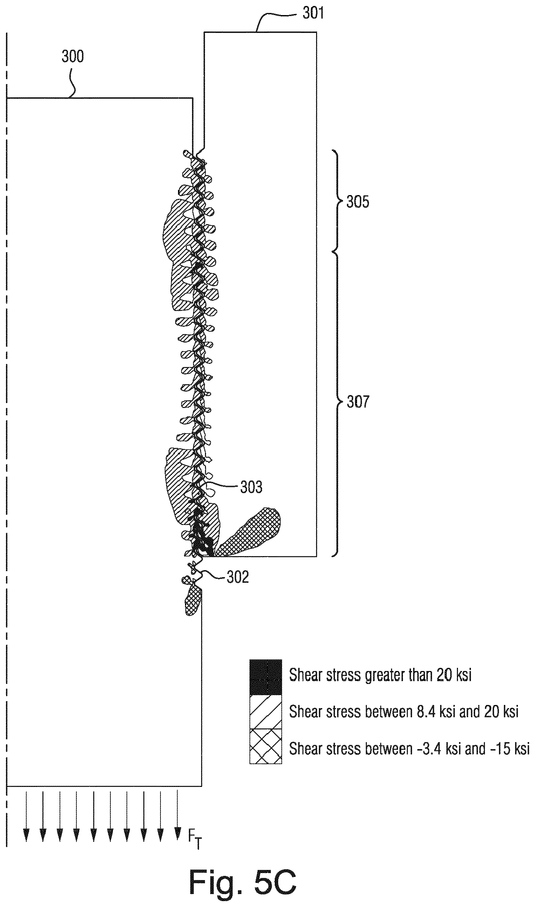

FIGS. 5A-5C show a comparison of shear stresses subjected to the engaged threads of fastener arrangements having straight screw threads (Fig. 5A), tapered screw threads (Fig. 5B), and the hybrid screw thread configuration of the present technology (Fig. 5C) when a tensile load F_{T} is applied to the male fastener 100, 200, 300. This comparison illustrates drawbacks of the prior art technologies and advantages of the present technology. For example, in Fig. 5A a large concentration of shear stress is shown near the lowest of the screw threads 103 of the female fastener. In other words, this lowest thread is subject to significant proportion of the shear stress and, therefore, is more likely to fail, which could in turn lead to disengagement of the fasteners and failure of the connection. Fig. 5B shows that the lowest of the screw threads 203 of the female fastener 201 is not subjected to such a high concentration of shear stress as in Fig. 5A. However, in Fig. 5B the top thread of the screw threads 203 of the female fastener 201 is now subject to a larger proportion of the shear stress. While a failure of the top thread of the screw threads 203 may not lead to a complete failure of the connection, because there are several threads below the top thread, this increased shear stress indicates that galling may occur in the upper region of the interface between the screw threads 202, 203.

Fig. 5C depicts how the hybrid screw threads of the present technology, which include the tapered screw thread portion 307 and the straight screw thread portion 305, is subject to a more uniform distribution of shear stress along the length of the screw threads 303 of the female fastener 303. Accordingly, the arrangement in Fig. 5C represents an improvement over the straight screw thread technology in that the bottom thread is not subject to a disproportionately high concentration of shear stress, thereby better avoiding a complete failure of the connection between the fasteners. Also, the arrangement in Fig. 5C represents an improvement over the tapered screw thread technology in that the top thread is not subject to a disproportionately high concentration of shear stress, thereby better avoiding galling between the screw threads 302, 303.

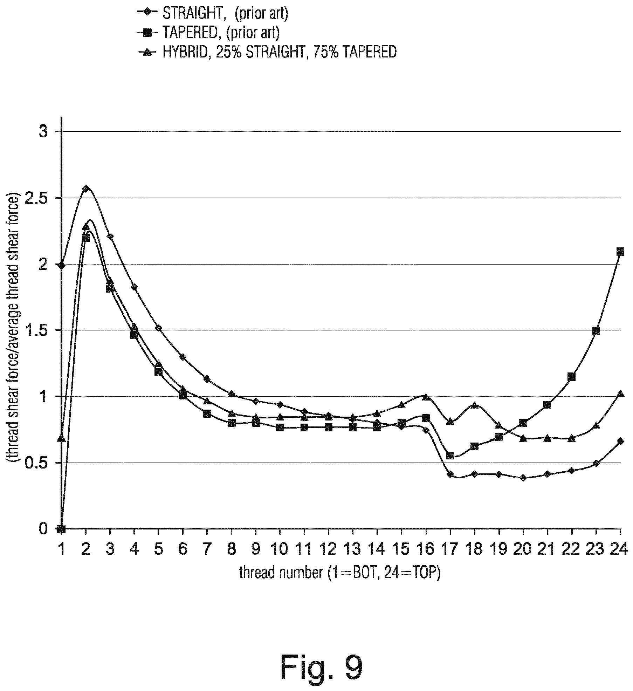

Figs. 8 and 9 are charts comparing the shear force applied to individual screw threads divided by the average shear force of all the engaged threads of a female fastener, *e.g*., a nut, joined to a male fastener, *e.g.,* a stud or a bolt, that is subjected to a load. Fig. 9 further depicts the isochronous creep material response of the fastener arrangements. Each chart has a line corresponding to each of a female fastener having straight screw threads, a female fastener having tapered screw threads, and a female fastener having the hybrid screw threads of the present technology where the bottom 75% of the screw threads *(i.e.,* threads 1-18) are tapered and the top 25% of the screw threads *(i.e.,* threads 19-24) are straight. It should be understood that the bottom screw thread is the screw thread that is engaged first when the fastener arrangement is assembled and the top screw thread is engaged last. These charts depict the various drawbacks of the prior art and the advantages of the hybrid screw threads of the present technology. For example, it can be seen that the bottom threads of the female fastener with the straight screw threads are subject to the greatest shear stress, which may lead to a failure of the connection. Also, in the female fastener with the tapered screw threads, the top threads of the female fastener are subject to a disproportionately high concentration of shear stress, which may lead to galling. Advantageously, it can also be seen that the female fastener having hybrid screw threads is subject to more uniform distribution of shear stress along the thread length of the female fastener, especially from threads 17 to 24, which reduces both the risk of galling and complete failure of the connection. Hence, even after the bolt and nut materials have crept due to prolonged exposure at high temperature, the hybrid thread configuration still provides a more uniform shear stress loading amongst the thread interfaces.

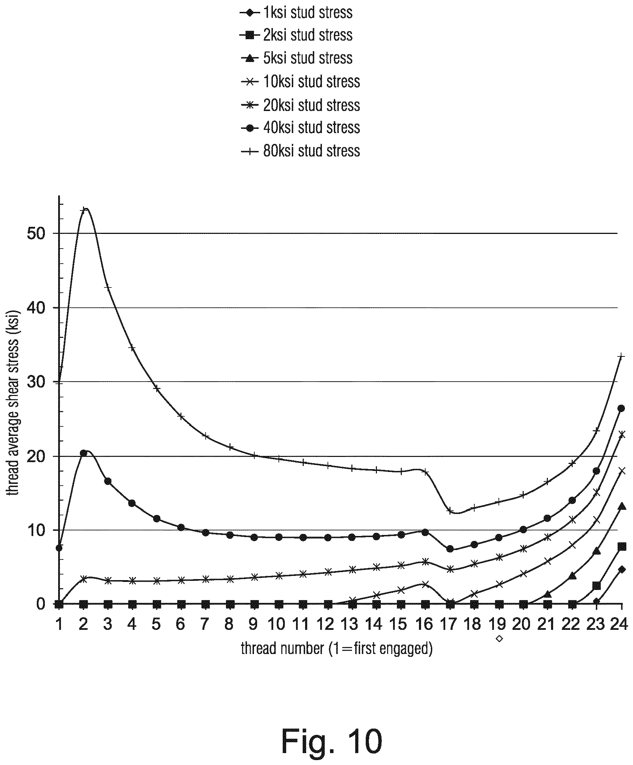

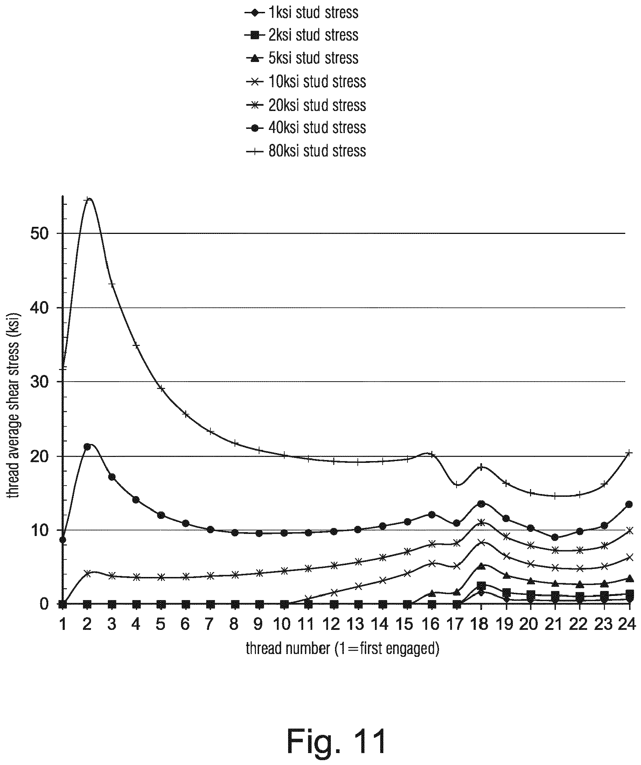

Figs. 10 and 11 are charts depicting the shear stresses subjected to individual threads of a female fastener having tapered screw threads and the hybrid screw threads according to the present technology, respectively, when different loads are applied to the corresponding male fastener. In Fig. 10, it can again be seen that the top thread of the tapered screw threads is subject to the greatest proportion of shear stress at the various loads, which may lead to galling. It should be understood that the bottom screw thread is the screw thread that is engaged first when the fastener arrangement is assembled and the top screw thread is engaged last. However, it is noteworthy in this chart that when the load reaches the highest level that the bottom thread actually becomes the highest loaded thread. Accordingly, at the highest load level shown the galling risk is still high, but the risk of complete failure of the connection also increases significantly because now the bottom thread is subject to the greatest shear stress. It is also noteworthy that Fig. 10 shows that at the lower load levels that only the top few threads are subject to any shear stress at all. In other words, at the lower load levels the share of the shear stress concentrated at the top threads is disproportionately high, which is the main cause of galling during the fastener tightening process

Fig. 11 depicts how the hybrid screw threads of the present technology represent an improvement over the tapered screw threads. In this example, the bottom 75% of the screw threads of the female fastener (*i.e.,* threads 1-18) are tapered and the top 25% of the screw threads of the female fastener (*i.e.,* threads 19-24) are straight. It should be understood that the bottom screw thread is the screw thread that is engaged first when the fastener arrangement is assembled and the top screw thread is engaged last. Here, it can be seen that the shear stresses are distributed over a larger number of threads at all load levels. For example, threads 18-24 all are subjected to a fairly equal amount of shear stress at all of the charted load levels, particularly the lower stud stress levels experienced at the beginning of fastener assembly, where galling risk is highest. Also, noteworthy is that while the bottom portion of the threads is subject to the highest level of shear stress at the highest two load levels, the remaining threads nevertheless maintain a more uniform distribution of the shear stresses such that galling and/or complete failure of the connection are less likely.

Fig. 12 is a chart depicting a comparison of shear stresses subjected to a female fastener having straight screw threads, tapered screw threads, and hybrid screw threads according to another example of the present technology where the bottom 50% of the screw threads (*i.e.,* threads 1-12) are tapered and the top 50% of the screw threads (*i.e.,* threads 13-24) are straight when a load is applied to the corresponding male fastener. It should be understood that the bottom screw thread is the screw thread that is engaged first when the fastener arrangement is assembled and the top screw thread is engaged last. With regard to the straight screw threads and the tapered screw threads, the shear stresses subjected to the individual threads are similar to those depicted in Fig. 8 above in that the lower portion of the straight screw threads is subject to a disproportionately high amount of shear stress and the upper portion of the tapered screw threads is subject to a disproportionately high amount of shear stress. Noteworthy here is that in the hybrid screw thread configuration when the proportion of tapered and straight screw threads is even it is the middle thread that is subjected to the highest amount of shear stress. Also noteworthy is that the proportion of shear stress distributed to the top and bottom portions of the screw threads is more uniform along the thread length. Indeed, in this chart the lowest thread of the hybrid screw thread example is subjected to less shear stress than the completely tapered or completely straight screw threads. The more uniform shear stress distribution in the hybrid screw threads of this example indicate that such a fastener arrangement will be less susceptible to galling and/or complete failure of the connection.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims. Various aspects and embodiments of the present invention will now be defined by the following numbered clauses:
1. A fastener arrangement for securing at least two components together, the fastener arrangement comprising:
   a male fastener with a first screw thread; and
   a female fastener with a second screw thread,
   wherein one of the first screw thread and the second screw thread is a straight screw thread and the other of the first screw thread and the second screw thread is a hybrid screw thread that includes a tapered screw thread portion and a straight screw thread portion.
2. The fastener arrangement of clause 1, wherein each start of the hybrid screw thread is continuous from the tapered screw thread portion to the straight screw thread portion.
3. The fastener arrangement of clause 1, wherein the straight screw thread of one of the male fastener and the female fastener is structured to engage the tapered screw thread portion of the hybrid screw thread before the straight screw thread portion when the male fastener and the female fastener are engaged.
4. The fastener arrangement of clause 1, wherein 50% of the thread length of the hybrid screw thread is the tapered screw thread portion and 50% of the thread length of the hybrid screw thread is the straight screw thread portion.
5. The fastener arrangement of clause 1, wherein 75% of the thread length of the hybrid screw thread is the tapered screw thread portion and 25% of the thread length of the hybrid screw thread is the straight screw thread portion.
6. The fastener arrangement of clause 1, wherein the tapered screw thread portion is more than 50% of the thread length of the hybrid screw thread or the straight screw thread portion is more than 50% of the thread length of the hybrid thread.
7. The fastener arrangement of clause 1, wherein the tapered screw thread portion is less than 50% of the thread length of the hybrid screw thread or the straight screw thread portion is less than 50% of the thread length of the hybrid thread.
8. The fastener arrangement of clause 1, wherein the straight screw thread of one of the first screw thread and the second screw thread engages with the tapered screw thread portion and the straight screw thread portion of the hybrid screw thread when the male fastener and the female fastener are fully engaged.
9. The fastener arrangement of clause 1, wherein the male fastener is a stud or a bolt and the female fastener is a nut.
10. The fastener arrangement of clause 1, wherein the tapered screw thread portion and the straight screw thread portion of the hybrid screw thread have a thread configuration that comprises one of: unified (standard), unified (coarse), unified (sharp V), metric, British Standard Whitworth, Acme, buttress, knuckle, square, and modified square.
11. A male fastener comprising:
   a hybrid screw thread that includes a tapered screw thread portion and a straight screw thread portion.
12. The male fastener of clause 11, wherein each start of the hybrid screw thread is continuous from the tapered screw thread portion to the straight screw thread portion.
13. The male fastener of clause 11, wherein 50% of the thread length of the hybrid screw thread is the tapered screw thread portion and 50% of the thread length of the hybrid screw thread is the straight screw thread portion.
14. The male fastener of clause 11, wherein 75% of the thread length of the hybrid screw thread is the tapered screw thread portion and 25% of the thread length of the hybrid screw thread is the straight screw thread portion.
15. The male fastener of clause 11, wherein the tapered screw thread portion is more than 50% of the thread length of the hybrid screw thread or the straight screw thread portion is more than 50% of the thread length of the hybrid thread.
16. The male fastener of clause 11, wherein the tapered screw thread portion is less than 50% of the thread length of the hybrid screw thread or the straight screw thread portion is less than 50% of the thread length of the hybrid thread.
17. The male fastener of clause 11, wherein the male fastener is a stud or a bolt.
18. The male fastener of clause 11, wherein the tapered screw thread portion and the straight screw thread portion of the hybrid screw thread have a thread configuration that comprises one of: unified (standard), unified (coarse), unified (sharp V), metric, British Standard Whitworth, Acme, buttress, knuckle, square, and modified square.
19. A female fastener comprising:
   a hybrid screw thread that includes a tapered screw thread portion and a straight screw thread portion.
20. The female fastener of clause 19, wherein each start of the hybrid screw thread is continuous from the tapered screw thread portion to the straight screw thread portion.
21. The female fastener of clause 19, wherein 50% of the thread length of the hybrid screw thread is the tapered screw thread portion and 50% of the thread length of the hybrid screw thread is the straight screw thread portion.
22. The female fastener of clause 19, wherein 75% of the thread length of the hybrid screw thread is the tapered screw thread portion and 25% of the thread length of the hybrid screw thread is the straight screw thread portion.
23. The female fastener of clause 19, wherein the tapered screw thread portion is more than 50% of the thread length of the hybrid screw thread or the straight screw thread portion is more than 50% of the thread length of the hybrid thread.
24. The female fastener of clause 19, wherein the tapered screw thread portion is more than 50% of the thread length of the hybrid screw thread or the straight screw thread portion is more than 50% of the thread length of the hybrid thread.
25. The female fastener of clause 19, wherein the female fastener is a nut.
26. The female fastener of clause 19, wherein the tapered screw thread portion and the straight screw thread portion of the hybrid screw thread have a thread configuration that comprises one of: unified (standard), unified (coarse), unified (sharp V), metric, British Standard Whitworth, Acme, buttress, knuckle, square, and modified square.

## Claims

1. A fastener arrangement for securing at least two components together, the fastener arrangement comprising:
a male fastener (300) with a first screw thread (302); and
a female fastener (301) with a second screw thread (303),
wherein one of the first screw thread (302) and the second screw thread (303) is a straight screw thread and the other of the first screw thread and the second screw thread is a hybrid screw thread that includes a tapered screw thread portion (307) and a straight screw thread portion (305).

2. The fastener arrangement of claim 1, wherein each start of the hybrid screw thread is continuous from the tapered screw thread portion (307) to the straight screw thread portion (305).

3. The fastener arrangement of claim 1 or claim 2, wherein the straight screw thread of one of the male fastener (300) and the female fastener (301) is structured to engage the tapered screw thread portion (307) of the hybrid screw thread before the straight screw thread portion (305) when the male fastener (300) and the female fastener (301) are engaged.

4. The fastener arrangement of any preceding claim, wherein 50% of the thread length of the hybrid screw thread is the tapered screw thread portion (307) and 50% of the thread length of the hybrid screw thread is the straight screw thread portion (305).

5. The fastener arrangement of any preceding claim, wherein 75% of the thread length of the hybrid screw thread is the tapered screw thread portion (307) and 25% of the thread length of the hybrid screw thread is the straight screw thread portion (305).

6. The fastener arrangement of any preceding claim, wherein the tapered screw thread portion (307) is more than 50% of the thread length of the hybrid screw thread or the straight screw thread portion (305) is more than 50% of the thread length of the hybrid thread.

7. The fastener arrangement of any preceding claim, wherein the tapered screw thread portion (307) is less than 50% of the thread length of the hybrid screw thread or the straight screw thread portion (305) is less than 50% of the thread length of the hybrid thread.

8. The fastener arrangement of any preceding claim, wherein the straight screw thread of one of the first screw thread and the second screw thread engages with the tapered screw thread portion (307) and the straight screw thread portion (305) of the hybrid screw thread when the male fastener (3000) and the female fastener (301) are fully engaged.

9. The fastener arrangement of any preceding claim, wherein the male fastener (300) is a stud or a bolt and the female fastener (301) is a nut.

10. The fastener arrangement of any preceding claim, wherein the tapered screw thread portion (307) and the straight screw thread portion (305) of the hybrid screw thread have a thread configuration that comprises one of: unified (standard), unified (coarse), unified (sharp V), metric, British Standard Whitworth, Acme, buttress, knuckle, square, and modified square.

11. A male fastener (300) comprising:
a hybrid screw thread that includes a tapered screw thread portion (307) and a straight screw thread portion (305).

12. The male fastener of claim 11, wherein each start of the hybrid screw thread is continuous from the tapered screw thread portion (307) to the straight screw thread portion (305).

13. The male fastener of claim 11 or claim 12, wherein the male fastener (300) is a stud or a bolt.

14. A female fastener (301) comprising:
a hybrid screw thread that includes a tapered screw thread portion (307) and a straight screw thread portion (305).

15. The female fastener of claim 14, wherein each start of the hybrid screw thread is continuous from the tapered screw thread portion (307) to the straight screw thread portion (305).
